# EUROPÄISCHE PATENTANMELDUNG

(11) **EP 4 763 800 A1**
(43) Veröffentlichungstag der Anmeldung: **24.06.2026**
(21) Anmeldenummer: 24221766.9
(22) Anmeldetag: 19.12.2024
(51) Int. Cl.: C01B 3/38, F25J 3/04, C01B 3/48, C01B 3/56, F01K 17/06, F22G 5/12

(54) **VERFAHREN UND ANLAGE ZUR GEWINNUNG EINES WASSERSTOFFSTROMS**

(71) Anmelder: GasConTec GmbH, 61348 Bad Homburg v. d. Höhe (DE)
(72) Erfinder: Lauer, Wolfgang, 34613 Schwalmstadt (DE); Rappold, Dorit, 60437 Frankfurt (DE); Wagner, Ulrich, 06406 Bernburg, OT Biendorf (DE); Balthasar, Wolff, 40883 Ratingen (DE)
(74) Vertreter: Patentanwälte Bauer Vorberg Kayser

(57) **Zusammenfassung**

Die Erfindung betrifft ein Verfahren zur Gewinnung eines Wasserstoffstroms (1) in einer Anlage (2), wobei ein kohlenstoffhaltiger Energieträgerstrom (3) und ein Sauerstoffstrom (4) aus einer Sauerstoffgewinnungsanordnung (5) der Anlage (2) einer ATR-Reaktoranordnung (6) der Anlage (2) zum Gewinnen eines Synthesegasstroms (7) mit Wasserstoff und Kohlenstoffoxiden zugeführt wird, wobei die ATR-Reaktoranordnung (6) aus dem Energieträgerstrom (3) den Synthesegasstrom (7) durch eine autotherme Reformierung mit dem Sauerstoffstrom (4) gewinnt, sodass eine insbesondere katalytische partielle Oxidation die für die endothermen Reformierungsreaktionen erforderliche Wärme bereitstellt, wobei der Synthesegasstrom (7) zumindest teilweise einer Trennvorrichtung (8) der Anlage (2) zum Trennen des Synthesegasstroms (7) in den Wasserstoff aufweisenden Wasserstoffstrom (1) und in einen Kohlenstoffoxide aufweisenden Purgestrom (9) zugeführt wird, , wobei die Anlage (2) einen Dampferhitzer (13) aufweist, welcher Dampferhitzer (13) mindestens eine Überhitzungsstufe (14a, b) zum Gewinnen eines jeweiligen überhitzten Ausgangs-Dampfstroms (15a, b) aus einem jeweiligen Eingangs-Dampfstrom (16a, b) aufweist, welcher Eingangs-Dampfstrom (16a, b) bis zum Erhalten des überhitzten Ausgangs-Dampfstroms (15a, b) durch den Dampferhitzer (13) geführt wird und wobei die Anlage (2) eine Turbinenanordnung (12) zum Erzeugen von elektrischem Strom aufweist, welche Turbinenanordnung (12) durch mindestens einen überhitzten Ausgangs-Dampfstrom (15a, b) angetrieben wird, dadurch gekennzeichnet, dass die mindestens eine Überhitzungsstufe (14a, b) jeweils mindestens zwei Heizabschnitte (17) aufweist, welche Heizabschnitte (17) durch einen Innenbereich (18) des Dampferhitzers (13) geführt sind, in welchem Innenbereich (18) die Heizabschnitte (17) durch einen Brenner (19) des Dampferhitzers (13) erhitzt werden, dass die mindestens eine Überhitzungsstufe (14a, b) einen prozesstechnisch zwischen den mindestens zwei Heizabschnitten (17) angeordneten Quenchabschnitt (20) aufweist, in welchem Quenchabschnitt (20) dem Eingangs-Dampfstrom (16a, b) in der Anlage (2) angefallener Dampf zum Quenchen zugeführt wird. Die Erfindung betrifft ebenso ein entsprechendes Verfahren zur Herstellung von Wasserstoff sowie eine entsprechende Anlage zur Gewinnung eines Wasserstoffstroms.

## Beschreibung

Die Erfindung betrifft ein Verfahren zur Gewinnung eines Wasserstoffstroms mit den Merkmalen des Oberbegriffs von Anspruch 1, ein Verfahren zur Herstellung von Wasserstoff mit den Merkmalen des Oberbegriffs von Anspruch 18 sowie eine Anlage zur Gewinnung eines Wasserstoffstroms mit den Merkmalen des Oberbegriffs von Anspruch 19.

Die Anforderung Wasserstoff so zu gewinnen, dass möglichst geringe CO2-Emissionen dabei anfallen, nimmt stetig zu. Diese Anforderung besteht auch für die Herstellung von verschiedenen Stoffen, für die Wasserstoff als Ausgangsbasis dient wie etwa Ammoniak. Eine bekannte Möglichkeit zum Gewinnen von Wasserstoff besteht darin, zunächst einen Energieträgerstrom wie etwa Erdgas in ein Synthesegas umzuwandeln, beispielsweise durch einen autothermen Reformer (ATR). Ein solches Synthesegas weist Wasserstoff auf, welcher dann aus dem Synthesegas abgetrennt werden kann. In einer entsprechenden Anlage ist allerdings Energie für verschiedene Prozess erforderlich, wobei darauf zu achten ist, dass die Bereitstellung dieser Energie möglichst wenig oder gar keine CO2-Emissionen verursacht.

Eine ausschließlich mit einem ATR zur Synthesegasgewinnung betriebene Ammoniakanlage, in welcher auch ein Wasserstoffstrom für die Ammoniaksynthese gewonnen wird, kann so ausgelegt werden, dass sie in sich energetisch autark arbeitet, d.h. weder Dampf noch Strom importiert bzw. exportiert werden müssen. Wird das in diesem Prozess abgetrennte CO2 unterirdisch eingelagert oder mineralisiert oder für einen EOR Prozess (Enhanced Oil Recovery) eingesetzt, können Restemissionen von weniger als 0,03 t CO2 pro t Ammoniak oder weniger als 0,2 t CO2 pro t Wasserstoff erreicht werden. Ermöglicht wird dies durch sehr hohe CO2 Abscheidegrade (bis größer 98 %), welche auch für die integrierte dampfbetriebene Stromerzeugung nutzbar sind.

Eine Anlage zur Herstellung von Ammoniak bei der das Synthesegas durch einen ATR gewonnen wird ist in der EP 4 269 332 A1 aus dem Stand der Technik offenbart.

Ausgehend von einer solchen Anlage und einem solchen Verfahren zum Gewinnen eines Wasserstoffstroms besteht die Aufgabe der Erfindung darin, die CO2-Bilanz noch weiter zu verbessern.

Bezogen auf ein Verfahren zum Gewinnen von Wasserstoff gemäß dem Oberbegriff von Anspruch 1 wird diese Aufgabe durch die Merkmale des kennzeichnenden Teils von Anspruch 1 gelöst. Bezogen auf ein Verfahren zur Herstellung von Wasserstoff gemäß dem Oberbegriff von Anspruch 18 wird diese Aufgabe durch die Merkmale des kennzeichnenden Teils von Anspruch 18 gelöst. Bezogen auf eine Anlage zum Gewinnen von Wasserstoff gemäß dem Oberbegriff von Anspruch 19 wird diese Aufgabe durch die Merkmale des kennzeichnenden Teils von Anspruch 19 gelöst.

Der Erfindung liegt die Erkenntnis zugrunde, dass durch Modifikation der Fired Heater (Einsatzstofferhitzer) die erzeugte Dampfmenge im Prozess weit über den Eigenbedarf der Anlage hinaus erhöht werden kann. Mit diesem zusätzlichen Dampf kann weiterer Strom erzeugt werden, ohne dass die ohnehin vorhandenen Restemissionen an CO2 weiter erhöht werden. Damit verbessert sich automatisch die CO2-Bilanz. Insgesamt kann auf diese Weise sogar mehr Dampf als für den Betrieb der Anlage nötig, mehr Strom als für den Betrieb der Anlage nötig oder sogar sowohl mehr Dampf als für den Betrieb der Anlage nötig als auch mehr Strom als für den Betrieb der Anlage nötig erzeugt werden.

Es gibt verschiedene sinnvolle Möglichkeiten zur Nutzung dieses elektrischen Stroms und des zusätzlichen Dampfes. So kann dieser Strom zum Antrieb der Kompressoren in der Anlage eingesetzt werden. Ebenso kann dieser Strom exportiert werden und dadurch - da er ohne eigene CO2-Belastung gewonnen wurde - dazu führen, dass der Wasserstoff mit einer CO2-Bilanz von negativen Emissionen gewonnen wird. Ebenso kann der auf diese Weise erzeugte und überschüssige Dampf aus der Anlage herausgeführt und beispielsweise in einer weiteren Anlage verwendet werden, in der dann entsprechend die Notwendigkeit entfällt, diesen Dampf dort zu gewinnen. Auf diese Weise kann die rechnerische CO2-Gesamtbilanz der Anlage weiter verringert und ggf. sogar insgesamt unter Null gesenkt werden, sofern man das eingesparte CO2 aus dem eingesetzten Strommix berücksichtigt.

Die jeweils bevorzugte Ausgestaltung des Unteranspruchs 8 und des Unteranspruchs 12 beschreibt eine Möglichkeit, die zur Verfügung stehende Heizleistung für die Überhitzung im Wesentlichen ohne Ausweitung der CO2-Emissionen zu erhöhen.

Die bevorzugte Ausgestaltung des Unteranspruchs 15 sieht vor, die Lehre zur Verringerung der CO2-Emissionen für die Herstellung von Ammoniak einzusetzen.

Weitere Einzelheiten, Merkmale, Ausgestaltungen, Ziele und Vorteile der vorliegenden Erfindung werden nachfolgend anhand der lediglich Ausführungsbeispiele wiedergebenden Zeichnung erläutert. In der Zeichnung zeigt
- Fig. 1: schematisch das Fließbild einer vorschlagsgemäßen Anlage zur Ausführung des vorschlagsgemäßen Verfahrens gemäß einem ersten und einem zweiten Ausführungsbeispiel,
- Fig. 2: schematisch einen Dampferhitzer der Anlage der Fig. 1 gemäß dem ersten Ausführungsbeispiel und
- Fig. 3: schematisch einen Dampferhitzer der Anlage der Fig. 2 gemäß dem zweiten Ausführungsbeispiel.

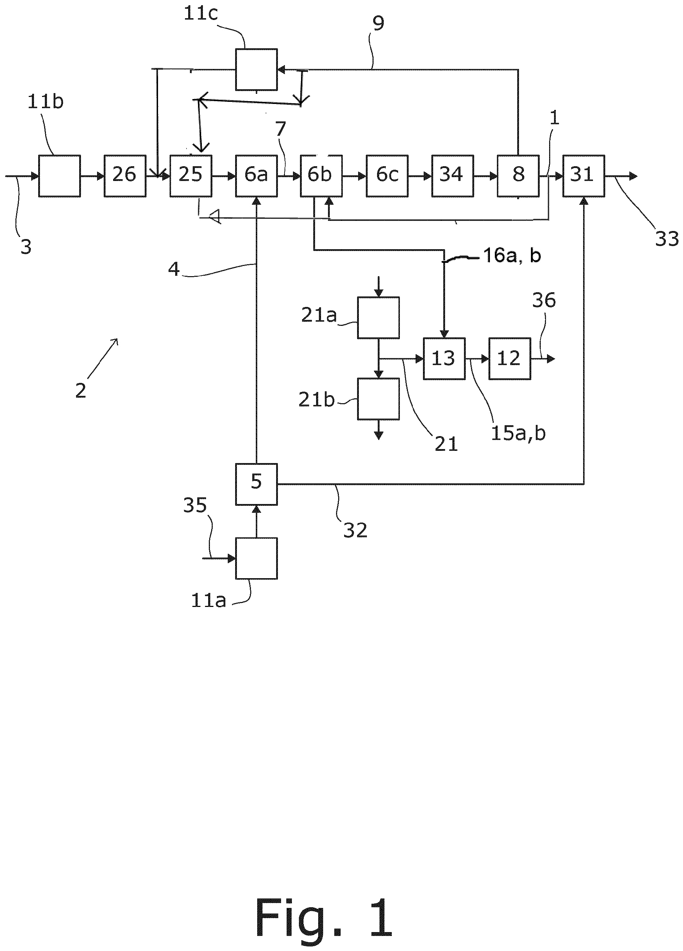

Das vorschlagsgemäße Verfahren dient der Gewinnung eines Wasserstoffstroms 1 in einer Anlage 2, wobei ein kohlenstoffhaltiger Energieträgerstrom 3 und ein Sauerstoffstrom 4 aus einer Sauerstoffgewinnungsanordnung 5 der Anlage 2 einer ATR-Reaktoranordnung 6a der Anlage 2 zum Gewinnen eines Synthesegasstroms 7 mit Wasserstoff und Kohlenstoffoxiden zugeführt wird. Bei dem Energieträgerstrom 3 handelt es sich hier und vorzugsweise um einen Erdgasstrom. Die Darstellung der Fig. 1 betrifft sowohl das erste Ausführungsbeispiel der vorschlagsgemäßen Anlage als auch das zweite Ausführungsbeispiel der vorschlagsgemäßen Anlage. Beide sind zur Ausführung des vorschlagsgemäßen Verfahrens eingerichtet.

Im vorschlagsgemäßen Verfahren gewinnt die ATR-Reaktoranordnung 6a aus dem Energieträgerstrom 3 den Synthesegasstrom 7 durch eine autotherme Reformierung mit dem Sauerstoffstrom 4, sodass eine insbesondere katalytische partielle Oxidation die für die endothermen Reformierungsreaktionen erforderliche Wärme bereitstellt. Es hat sich herausgestellt, dass ein hier bevorzugtes Dampf-zu-C-Verhältnis zwischen 1,8 und 2,7 des Energieträgerstroms 3 bei Zuführung zu der ATR-Reaktoranordnung 6a besonders vorteilhaft ist. Dieser sorgt für einen niedrigen Methanslip. Methan im Synthesegas kann regelmäßig nur durch Auskreisen entfernt werden, was aber zu CO2-Emissionen führt. Die Verringerung des Methanslips reduziert also CO2-Emissionen dieses Ursprungs.

Im vorschlagsgemäßen Verfahren wird der Synthesegasstrom 7 zumindest teilweise einer Trennvorrichtung 8 der Anlage 2 zum Trennen des Synthesegasstroms 7 in den Wasserstoff aufweisenden Wasserstoffstrom 1 und in einen Kohlenstoffoxide aufweisenden Purgestrom 9 zugeführt wird. Vorzugsweise wird der Synthesegasstrom 7 im Wesentlichen vollständig der Trennvorrichtung 8 zugeführt. Bevorzugt ist, dass der Synthesegasstrom 7 einer CO2-Wäsche 34 der Anlage 2 zugeführt wird, welche prozesstechnisch der Trennvorrichtung 8 vorgelagert ist. Auf diese Weise kann der CO2-Gehalt des Purgestroms 9 verringert werden, was wiederum die CO2-Emissionen bei einer Verfeuerung des Purgestroms 9 verringert. Bevorzugt weist die Anlage 2 auch mindestens eine Shiftvorrichtung 6c für eine Wassergas-Shift-Reaktion vor, welche mindestens eine Shiftvorrichtung 6c insbesondere der CO2-Wäsche 34 prozesstechnisch vorgelagert angeordnet ist. Mit einer solchen Shiftvorrichtung 6c kann CO in dem Synthesegasstrom 7 in CO2 vor der Wäsche umgewandelt werden. Dies verhindert, dass dieses CO in den Purgestrom 9 gelangt und bei einer Verfeuerung dann ebenfalls zu CO2-Emissionen beiträgt.

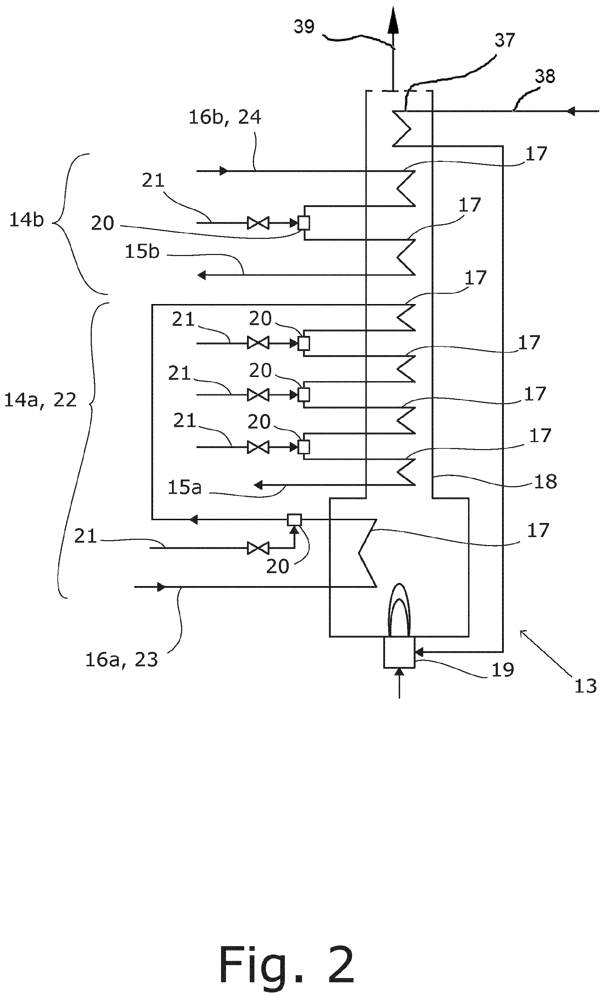

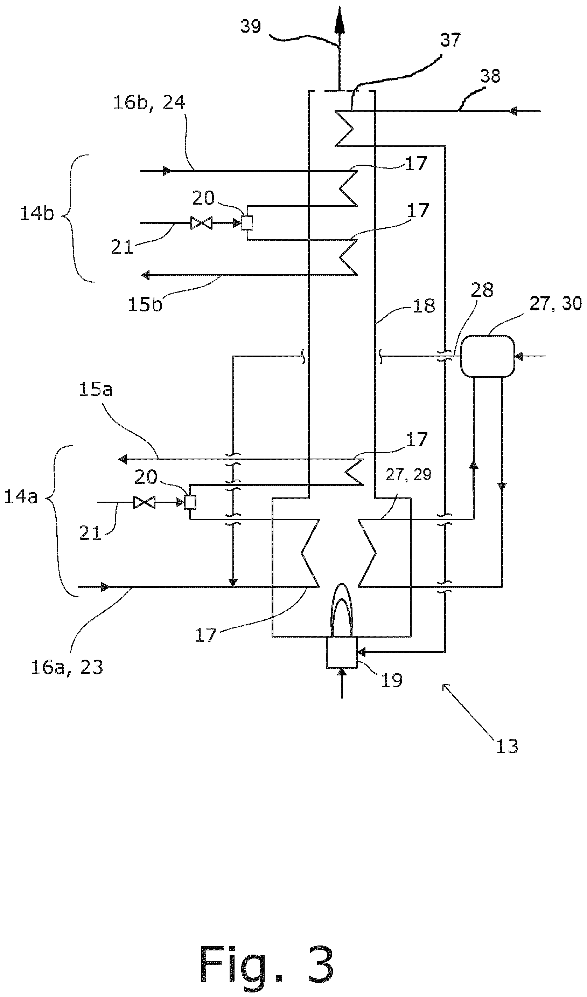

Beim vorschlagsgemäßen Verfahren weist die Anlage 2 einen Dampferhitzer 13 auf. Ein solcher Dampferhitzer 13 gemäß dem ersten Ausführungsbeispiel des vorschlagsgemäßen Verfahrens und gemäß dem ersten Ausführungsbeispiel der vorschlagsgemäßen Anlage 2 ist in der Fig. 2 dargestellt. Ein Dampferhitzer 13 gemäß dem zweiten Ausführungsbeispiel des vorschlagsgemäßen Verfahrens und gemäß dem zweiten Ausführungsbeispiel der vorschlagsgemäßen Anlage 2 ist in der Fig. 3 dargestellt.

Beim vorschlagsgemäßen Verfahren ist weiter vorgesehen, dass der Dampferhitzer 13 mindestens eine Überhitzungsstufe 14a, b zum Gewinnen eines jeweiligen überhitzten Ausgangs-Dampfstroms 15a, b aus einem jeweiligen Eingangs-Dampfstrom 16a, b aufweist, wobei der Eingangs-Dampfstrom 16a, b bis zum Erhalten des überhitzten Ausgangs-Dampfstroms 15a, b durch den Dampferhitzer 13 geführt wird. Bevorzugt ist, dass der jeweilige Eingangs-Dampfstrom 16a, b mit Dampf gesättigt ist.

Beim vorschlagsgemäßen Verfahren weist die Anlage 2 eine Turbinenanordnung 12 zum Erzeugen von elektrischem Strom auf, welche Turbinenanordnung 12 durch mindestens einen überhitzten Ausgangs-Dampfstrom 15a, b angetrieben wird.

Das vorschlagsgemäße Verfahren ist dadurch gekennzeichnet, dass die mindestens eine Überhitzungsstufe 14a, b jeweils mindestens zwei Heizabschnitte 17 aufweist, welche Heizabschnitte 17 durch einen Innenbereich 18 des Dampferhitzers 13 geführt sind, in welchem Innenbereich 18 die Heizabschnitte 17 durch einen Brenner 19 des Dampferhitzers erhitzt werden.

Das vorschlagsgemäße Verfahren ist schließlich dadurch gekennzeichnet, dass die mindestens eine Überhitzungsstufe 14a, b einen prozesstechnisch zwischen den mindestens zwei Heizabschnitten 17 angeordneten Quenchabschnitt 20 aufweist, in welchem Quenchabschnitt 20 dem Eingangs-Dampfstrom 16a in der Anlage angefallenes Kesselspeisewasser 21 zum Quenchen zugeführt wird. Mit Kesselspeisewasser 21 wird im Grunde beliebiges Wasser bezeichnet, welches an beliebiger Stelle in der Anlage angefallenes Prozesskondensat und ggf. darüber hinaus zugeführtes Wasser umfasst. So kann das Kesselspeisewasser 21 etwa teilweise aus Kondensat 36 der Turbinenanordnung 12 gewonnen werden.

Durch ein solches Quenchen kann der Dampfanteil weiter erhöht werden, was wiederum die Stromausbeute durch die Turbinenanordnung 12 der Anlage 2 erhöht. Diese Stromausbeute kann auf diese Weise so weit erhöht werden, dass mehr Strom erzeugt werden kann, als er in der Anlage 2 benötigt wird. Durch den Export dieses Stroms kann die CO2-Bilanz der Anlage 2 sogar grundsätzlich unter den Wert von Null gesenkt werden.

Gemäß einem bevorzugten Ausführungsbeispiel des vorschlagsgemäßen Verfahrens ist vorgesehen, dass der von der Turbinenanordnung 12 erzeugte elektrische Strom zumindest teilweise aus der Anlage 2 exportiert wird. Anders ausgedrückt wird zumindest ein Teil des erzeugten Stroms aus der Anlage 2 heraus- und einem elektrischen Verbraucher außerhalb der Anlage 2 zugeführt. Bei einem solchen Verbraucher kann es sich auch um einen Speicher für elektrische Energie handeln. Auf diese Weise fungiert die Anlage 2 als Elektrizitätswerk und dient folglich als Quelle von elektrischer Energie. Ebenso ist es bevorzugt, dass alternativ oder zusätzlich mindestens ein überhitzter Ausgangs-Dampfstrom 15a, b zumindest teilweise aus der Anlage 2 herausgeführt wird. Gemäß dieser Variante findet also von dem mindestens einen überhitzten Ausgangs-Dampfstrom 15a, b ein zumindest teilweiser Export außerhalb der Anlage 2 statt. Dieser Export kann etwa darin bestehen, den entsprechenden Teil des mindestens einen überhitzten Ausgangs-Dampfstroms 15a, b einer weiteren Anlage und speziell einem Verbraucher von Dampf in dieser weiteren Anlage zuzuführen.

Ein bevorzugtes Ausführungsbeispiel des vorschlagsgemäßen Verfahrens ist dadurch gekennzeichnet, dass das Kesselspeisewasser 21 prozesstechnisch nach einer Kesselspeisewasserpumpe 21a für die Zuführung zum Quenchen abgezweigt wird. Auf diese Weise kann das Kesselspeisewasser 21 mit dem durch die Kesselspeisewasserpumpte 21a erhöhten Druck zugeführt werden. Alternativ oder zusätzlich kann das Kesselspeisewasser 21 prozesstechnisch vor einer Konditionierungsvorrichtung 21b der Anlage 2 zur Konditionierung mit einem Phosphat für die Zuführung zum Quenchen abgezweigt werden. Speziell kann die Konditionierung in der Konditionierungsvorrichtung 21b mit Natriumphosphat erfolgen. Neben der Konditionierungsvorrichtung 21b zur Konditionierung mit einem Phosphat kann die Anlage 2 weitere Konditionierungsvorrichtungen zur Konditionierung des Kesselspeisewassers 21 aufweisen, wobei die Abzweigung für die Zuführung zum Quenchen gegenüber diesen an im Grunde prozesstechnisch beliebiger Stelle erfolgen kann.

Grundsätzlich kann der jeweilige Eingangs-Dampfstrom 16a, b beliebigen Ursprungs sein. Bevorzugt ist vorgesehen, dass die Anlage 2 einen Abhitzekessel 6b aufweist und der jeweilige Eingangs-Dampfstrom 16a, b in dem Abhitzekessel 6b erhitzt wird. Insbesondere kann es sein, dass der Abhitzekessel 6b der ATR-Reaktoranordnung 6a prozesstechnisch nachgeschaltet ist. Alternativ oder zusätzlich kann es sein, dass der Abhitzekessel 6b der mindestens einen Shiftvorrichtung 6c prozesstechnisch vorgeschaltet ist.

Ein bevorzugtes Ausführungsbeispiel des vorschlagsgemäßen Verfahrens ist dadurch gekennzeichnet, dass eine Mehrfach-Quench-Überhitzungsstufe 22 der mindestens einen Überhitzungsstufe 14a, b eine Vielzahl von Quenchabschnitten 20 aufweist, wobei jeder der Quenchabschnitte 20 prozesstechnisch zwischen zwei jeweiligen Heizabschnitten 17 der Mehrfach-Quench-Überhitzungsstufe 22 angeordnet ist. Gemäß der Darstellung der Fig. 2 handelt es sich bei der ersten Überhitzungsstufe 14a des ersten Ausführungsbeispiels um eine solche Mehrfach-Quench-Überhitzungsstufe 22. Erkennbar weist diese Mehrfach-Quench-Überhitzungsstufe 22 insgesamt vier Quenchabschnitte 20 und fünf Heizabschnitte 17 auf. Auf diese Weise kann der Dampfanteil im Ausgangs-Dampfstrom 15a besonders stark erhöht werden.

Ein weiteres bevorzugtes Ausführungsbeispiel des vorschlagsgemäßen Verfahrens ist dadurch gekennzeichnet, dass der Dampferhitzer 13 eine Vielzahl von Überhitzungsstufen 14a, b zum Gewinnen eines jeweiligen überhitzten Ausgangs-Dampfstroms 15a, b aus einem jeweiligen Eingangs-Dampfstrom 16a, b aufweist. Sowohl der Dampferhitzer 13 des ersten Ausführungsbeispiels gemäß Fig. 2 als auch der Dampferhitzer 13 des zweiten Ausführungsbeispiels gemäß Fig. 3 weist jeweils zwei Überhitzungsstufen 14a, b auf.

Gemäß einem bevorzugten Ausführungsbeispiel des vorschlagsgemäßen Verfahrens ist vorgesehen, dass jeder der Vielzahl von Überhitzungsstufen 14a, b einen jeweiligen Eingangs-Dampfstrom 16a, b und einen jeweiligen Ausgangs-Dampfstrom 15a, b mit einem unterschiedlichen Dampfdruck aufweist. Hier ist weiter bevorzugt, dass der Dampfdruck des Eingangs-Dampfstroms 16a und des Ausgangs-Dampfstroms 15a einer ersten Überhitzungsstufe 14a der Vielzahl von Überhitzungsstufen 14a, b in einem Hochdruckbereich ist und dass der Dampfdruck des Eingangs-Dampfstroms 16a und des Ausgangs-Dampfstroms 15a einer zweiten Überhitzungsstufe 14b der Vielzahl von Überhitzungsstufen 14a, b in einem Mitteldruckbereich ist. Sowohl bei dem ersten Ausführungsbeispiel gemäß der Fig. 2 als auch bei dem zweiten Ausführungsbeispiel gemäß der Fig. 3 handelt es sich bei dem Eingangs-Dampfstrom 16a der ersten Überhitzungsstufe 14a um einen gesättigten Hochdruck-Dampfstrom 23 und bei dem Eingangs-Dampfstrom 16b der zweiten Überhitzungsstufe 14b um einen gesättigten Mitteldruck-Dampfstrom 24. Insbesondere weist der Hochdruck-Dampfstrom 23 einen Druck zwischen 90 bar und 115 bar auf. Entsprechend kann der Mitteldruck-Dampfstrom 24 einen Druck zwischen 30 bar und 50 bar aufweisen.

Gemäß einem weiteren bevorzugten Ausführungsbeispiel des vorschlagsgemäßen Verfahrens ist vorgesehen, dass der überhitzte Ausgangs-Dampfstrom 15a, b einen Massenstrom an Dampf aufweist, welcher mindestens 120 % des Massenstroms an Dampf des Eingangs-Dampfstroms 16a, b beträgt.

Gemäß einem bevorzugten Ausführungsbeispiel des vorschlagsgemäßen Verfahrens ist vorgesehen, dass der Dampferhitzer 13 einen Wärmetauscher 37 zur Erhitzung eines sauerstoffhaltigen Verbrennungsgases 38 durch ein Rauchgas 39 als Abgas des Brenners 19 aufweist. Dies ist in den Fig. 2 und 3 dargestellt. Vorzugsweise handelt es sich bei dem Verbrennungsgas 38 um Umgebungsluft. Das Verbrennungsgas 38 wird dem Brenner 19 zu seinem Betrieb zugeführt und speist folglich den Brenner 19. Das Rauchgas 39 entsteht als Abgas durch den Betrieb des Brenners 19 und entweicht dann aus dem Dampferhitzer 13. Durch das Vorsehen des Wärmetauschers 37 wird eine Vorerwärmung des Verbrennungsgases 38 erreicht.

Ein bevorzugtes Ausführungsbeispiel des vorschlagsgemäßen Verfahrens ist dadurch gekennzeichnet, dass der Energieträgerstrom 3 einer der ATR-Reaktoranordnung 6 prozesstechnisch vorgelagerten Vorerwärmungsstufe 25 der Anlage 2 zur Vorerwärmung des Energieträgerstroms 3 zugeführt wird.

Es ist bevorzugt, dass die Vorerwärmungsstufe 25 überwiegend und vorzugsweise ausschließlich mit dem Purgestrom 9 gespeist wird. Anders ausgedrückt wird die Energie für die Hitze der Vorerwärmungsstufe 25 überwiegend und vorzugsweise ausschließlich durch eine Verfeuerung des Purgestrom 9 gewonnen. Ebenso kann es sein, dass gemäß der Darstellung in der Fig. 1 die Vorerwärmungsstufe 25 sowohl mit dem Wasserstoffstrom 1 als auch mit dem Purgestrom 9 gespeist wird. Diese Variante ist in der Fig. 1 dargestellt. Alternativ kann es sein, dass die Vorerwärmungsstufe 25 durch einen Gasstrom gespeist wird, welcher vom Energieträgerstrom 3 abgezweigt wurde.

Ein weiteres bevorzugtes Ausführungsbeispiel des vorschlagsgemäßen Verfahrens ist dadurch gekennzeichnet, dass die Trennvorrichtung 8 eine Adsorptionsvorrichtung ist und dass die Trennvorrichtung 8 mit einem Wirkungsgrad betrieben wird, welcher etwa 90 % beträgt, sodass etwa 10 % des Wasserstoffs im der Adsorptionsvorrichtung zugeführten Synthesegasstrom 7 in den Purgestrom 9 gelangt. Es kann ebenso sein, dass die Trennvorrichtung 8 mit einem Wirkungsgrad zwischen 90 % und 70 % betrieben wird, sodass zwischen 10 % und 30 % des Wasserstoffs im der Adsorptionsvorrichtung zugeführten Synthesegasstrom 7 in den Purgestrom 9 gelangt. Auf diese Weise kann sichergestellt werden, dass mit dem Purgestrom 9 eine ausreichend hohe Heizleistung bereitgestellt werden kann, ohne die durch die Verfeuerung des Purgestroms verursachten CO2-Emissionen zu erhöhen. Hier ist es weiter bevorzugt, dass es sich bei der Adsorptionsvorrichtung um eine Pressure-Swing-Adsorptionsvorrichtung (PSA) handelt.

Gemäß einem bevorzugten Ausführungsbeispiel des vorschlagsgemäßen Verfahrens ist vorgesehen, dass der Energieträgerstrom 3 einer der ATR-Reaktoranordnung 6 prozesstechnisch vorgelagerten Sättigungsstufe 26 der Anlage 2 zur Sättigung mit Dampf zugeführt wird und dass die Sättigungsstufe 26 mit Prozesskondensat gespeist wird. Anders ausgedrückt stellt in der Anlage 2 gewonnenes Prozesskondensat zumindest teilweise und vorzugsweise im Wesentlichen den Dampf zur Sättigung des Energieträgerstroms 3 bereit.

Gemäß einem weiteren bevorzugten Ausführungsbeispiel des vorschlagsgemäßen Verfahrens ist vorgesehen, dass der in dem jeweiligen Quenchabschnitt 20 dem Eingangs-Dampfstrom 16a, b zugeführtes Kesselspeisewasser 21 zumindest teilweise aus Prozesskondensat der Anlage 2 gewonnen wird. Vorzugsweise wird das zugeführte Kesselspeisewasser 21 überwiegend aus Prozesskondensat der Anlage 2 gewonnen.

Ein bevorzugtes Ausführungsbeispiel des vorschlagsgemäßen Verfahrens ist dadurch gekennzeichnet, dass der Dampferhitzer 13 eine Dampferzeugungsstufe 27 zum Erzeugen eines auf mindestens 290°C erhitzten Zusatzdampfstroms 28 aufweist. Vorzugsweise weist die Dampferzeugungsstufe 27 einen Zusatz-Heizabschnitt 29 auf, welcher im Innenbereich 18 des Dampferhitzers 13 gegenüberliegend zu einem Heizabschnitt 17 angeordnet ist. Dies entspricht dem in der Fig. 3 dargestellten Dampferhitzer 13 des zweiten Ausführungsbeispiels. Insbesondere kann diese Dampferzeugungsstufe 27 eine Dampftrommel 30 zum Erzeugen des Zusatzdampfstroms 28 aufweisen. Vorzugsweise wird der Zusatzdampfstrom 28 einem Eingangs-Dampfstrom 16a vor Zuführung zur Überhitzungsstufe 14a zugeführt wird. Aus der Fig. 3 geht hervor, wie der Zusatzdampfstrom dem Eingangs-Dampfstrom 16a bevor dieser der ersten Überhitzungsstufe 14a zugeführt wird.

Ein weiteres bevorzugtes Ausführungsbeispiel des vorschlagsgemäßen Verfahrens ist dadurch gekennzeichnet, dass der Dampferhitzer 13 und insbesondere der Brenner 19 des Dampferhitzers 13 mit Wasserstoff gespeist wird, vorzugsweise mit Wasserstoff aus dem Wasserstoffstrom 1. Auf diese Weise kann der Dampferhitzer 13 ohne oder jedenfalls mit geringen CO2-Emissionen betrieben werden.

Gemäß einem bevorzugten Ausführungsbeispiel des vorschlagsgemäßen Verfahrens ist vorgesehen, dass die Anlage 2 eine Kompressoranordnung 10 mit mindestens einem Kompressor 11a-c aufweist. Im vorliegenden Ausführungsbeispiel weist die Kompressoranordnung insgesamt drei Kompressoren 11a-c auf.

Ein erster Kompressor 11a dient der Druckerhöhung von Umgebungsluft 35 vor Zuführung zur Sauerstoffgewinnungsanordnung 5. Bei dieser handelt es sich vorzugsweise um eine Luftzerlegungsanordnung. Bei dem zweiten Kompressor 11b handelt es sich um einen Erdgaskompressor zur Druckerhöhung des Energieträgerstroms 3. Bei dem dritten Kompressor 11c handelt es sich um einen Purgegaskompressor zur Druckerhöhung des Purgestroms 9.

Gemäß einer bevorzugten Variante des vorschlagsgemäßen Verfahrens wird die Kompressoranordnung 10 zumindest teilweise mit Dampf betrieben und der mindestens eine überhitzte Ausgangs-Dampfstrom 15a, b wird der Kompressoranordnung 10 zugeführt.

Gemäß einer weiteren bevorzugten Variante des vorschlagsgemäßen Verfahrens ist vorgesehen, dass die Kompressoranordnung zumindest teilweise durch Strom betrieben wird und der Strom zum Betrieb der Kompressoranordnung 10 zumindest teilweise und insbesondere im Wesentlichen vollständig durch die Turbinenanordnung 12 erzeugt wird. Bei elektrisch betriebenen Kompressoren erfordern diese regelmäßig einen Großteil des insgesamt durch die Anlage 2 verbrauchten Stroms. Wenn nun der Dampf für den Betrieb der Turbinenanordnung 12 mit möglichst geringen CO2-Emissionen erzeugt werden kann, so verbessert das die CO2-Gesamtbilanz der Anlage 2 in erheblichem Maße. Bevorzugt ist weiter, dass ein im Wesentlichen vollständiger Strombedarf der Anlage 2 durch die Turbinenanordnung 12 erzeugt wird. Insbesondere kann es sogar sein, dass eine durch die Turbinenanordnung 12 erzeugte Stromleistung den Strombedarf der Anlage 2 übersteigt. Auf diese Weise kann prinzipiell sogar eine positive CO2-Gesamtbilanz der Anlage 2 erreicht werden.

Ein bevorzugtes Ausführungsbeispiel des vorschlagsgemäßen Verfahrens ist dementsprechend dadurch gekennzeichnet, dass von der Turbinenanordnung 12 erzeugter Strom zumindest teilweise von der Anlage 2 abgegeben wird. Anders ausgedrückt exportiert die Anlage 2 also zumindest einen Teil des von der Turbinenanordnung 12 erzeugten Stroms. Dieser kann beispielsweise in ein herkömmliches Stromnetz eingespeist werden oder zum Betrieb einer anderen Anlage verwendet werden.

Gemäß einem weiteren bevorzugten Ausführungsbeispiel des vorschlagsgemäßen Verfahrens ist vorgesehen, dass die Anlage eine Ammoniak-Reaktoranordnung 31 aufweist und dass der Ammoniak-Reaktoranordnung 31 der Wasserstoffstrom 1 und ein Stickstoffstrom 32 zur Herstellung von Ammoniak 33 zugeführt wird. Vorzugsweise wird der Stickstoffstrom32 ebenfalls von der Sauerstoffgewinnungsanordnung 5 bereitgestellt.

Eine bevorzugte Ausführungsform des vorschlagsgemäßen Verfahrens ist dadurch gekennzeichnet, dass der Energieträgerstrom 3 Erdgas aufweist. Vorzugsweise besteht der Energieträgerstrom 3 im Wesentlichen aus Erdgas.

Die vorschlagsgemäße Anlage 2 dient dem Gewinnen eines Wasserstoffstroms 1 und umfasst eine Sauerstoffgewinnungsanordnung 5 zum Bereitstellen eines Sauerstoffstroms 4 sowie eine ATR-Reaktoranordnung 6 zum Gewinnen eines Synthesegasstroms 7 mit Wasserstoff und Kohlenstoffoxiden, wobei der ATR-Reaktoranordnung 6 ein kohlenstoffhaltiger Energieträgerstrom 3 und der Sauerstoffstrom 4 zugeführt wird.

Bei der vorschlagsgemäßen Anlage 2 ist die ATR-Reaktoranordnung 6 dazu eingerichtet ist, aus dem Energieträgerstrom 3 den Synthesegasstrom 7 durch eine autotherme Reformierung mit dem Sauerstoffstrom 4 zu gewinnen, sodass eine insbesondere katalytische partielle Oxidation die für die endothermen Reformierungsreaktionen erforderliche Wärme bereitstellt.

Die vorschlagsgemäße Anlage 2 umfasst weiter eine Trennvorrichtung 8 zum Trennen des Synthesegasstroms 7 in den Wasserstoff aufweisenden Wasserstoffstrom 1 und in einen Kohlenstoffoxide aufweisenden Purgestrom 10, welcher Trennvorrichtung 8 der Synthesegasstrom 7 zumindest teilweise zugeführt.

Die vorschlagsgemäße Anlage 2 umfasst ebenso eine Kompressoranordnung 10 mit mindestens einem Kompressor 11a-c und eine dampfgetriebene Turbinenanordnung 12, welche elektrischen Strom bereitstellt, durch welchen zumindest teilweise die Kompressoranordnung 10 betrieben wird.

Die vorschlagsgemäße Anlage 2 umfasst einen Dampferhitzer 13 auf, wobei der Dampferhitzer 13 mindestens eine Überhitzungsstufe 14a, b zum Gewinnen eines jeweiligen überhitzten Ausgangs-Dampfstroms 15a, b aus einem jeweiligen Eingangs-Dampfstrom 16a, b aufweist, welcher Eingangs-Dampfstrom 16a, b bis zum Erhalten des überhitzten Ausgangs-Dampfstroms 15a, b durch den Dampferhitzer 13 geführt wird.

Die vorschlagsgemäße Anlage 2 ist dadurch gekennzeichnet, dass die mindestens eine Überhitzungsstufe 14a, b jeweils mindestens zwei Heizabschnitte 17 aufweist, welche Heizabschnitte 17 durch einen Innenbereich 18 des Dampferhitzers 13 geführt sind, in welchem Innenbereich 18 die Heizabschnitte 17 durch einen Brenner 19 des Dampferhitzers 13 erhitzt werden, wobei die mindestens eine Überhitzungsstufe 14a, b einen prozesstechnisch zwischen den mindestens zwei Heizabschnitten 17 angeordneten Quenchabschnitt 20 aufweist, in welchem Quenchabschnitt 20 dem Eingangs-Dampfstrom 16a, b in der Anlage 2 angefallener Dampf zum Quenchen zugeführt wird.

Vorstehend beschriebene bevorzugte Ausgestaltungen, Merkmale und Eigenschaften des vorschlagsgemäßen Verfahrens entsprechen bevorzugten Ausgestaltungen, Merkmalen und Eigenschaften der vorschlagsgemäßen Anlage und umgekehrt.

## Patentansprüche

1. Verfahren zur Gewinnung eines Wasserstoffstroms (1) in einer Anlage (2), wobei ein kohlenstoffhaltiger Energieträgerstrom (3) und ein Sauerstoffstrom (4) aus einer Sauerstoffgewinnungsanordnung (5) der Anlage (2) einer ATR-Reaktoranordnung (6) der Anlage (2) zum Gewinnen eines Synthesegasstroms (7) mit Wasserstoff und Kohlenstoffoxiden zugeführt wird, wobei die ATR-Reaktoranordnung (6) aus dem Energieträgerstrom (3) den Synthesegasstrom (7) durch eine autotherme Reformierung mit dem Sauerstoffstrom (4) gewinnt, sodass eine insbesondere katalytische partielle Oxidation die für die endothermen Reformierungsreaktionen erforderliche Wärme bereitstellt, wobei der Synthesegasstrom (7) zumindest teilweise einer Trennvorrichtung (8) der Anlage (2) zum Trennen des Synthesegasstroms (7) in den Wasserstoff aufweisenden Wasserstoffstrom (1) und in einen Kohlenstoffoxide aufweisenden Purgestrom (9) zugeführt wird, wobei die Anlage (2) einen Dampferhitzer (13) aufweist, welcher Dampferhitzer (13) mindestens eine Überhitzungsstufe (14a, b) zum Gewinnen eines jeweiligen überhitzten Ausgangs-Dampfstroms (15a, b) aus einem jeweiligen Eingangs-Dampfstrom (16a, b) aufweist, welcher Eingangs-Dampfstrom (16a, b) bis zum Erhalten des überhitzten Ausgangs-Dampfstroms (15a, b) durch den Dampferhitzer (13) geführt wird und wobei die Anlage (2) eine Turbinenanordnung (12) zum Erzeugen von elektrischem Strom aufweist, welche Turbinenanordnung (12) durch mindestens einen überhitzten Ausgangs-Dampfstrom (15a, b) angetrieben wird, **dadurch gekennzeichnet, dass** die mindestens eine Überhitzungsstufe (14a, b) jeweils mindestens zwei Heizabschnitte (17) aufweist, welche Heizabschnitte (17) durch einen Innenbereich (18) des Dampferhitzers (13) geführt sind, in welchem Innenbereich (18) die Heizabschnitte (17) durch einen Brenner (19) des Dampferhitzers (13) erhitzt werden, dass die mindestens eine Überhitzungsstufe (14a, b) einen prozesstechnisch zwischen den mindestens zwei Heizabschnitten (17) angeordneten Quenchabschnitt (20) aufweist, in welchem Quenchabschnitt (20) dem Eingangs-Dampfstrom (16a, b) in der Anlage (2) angefallenes Kesselspeisewasser (21) zum Quenchen zugeführt wird.

2. Verfahren nach Anspruch 1, **dadurch gekennzeichnet, dass** der von der Turbinenanordnung (12) erzeugte elektrische Strom zumindest teilweise aus der Anlage (2) exportiert wird, vorzugsweise, dass mindestens ein überhitzter Ausgangs-Dampfstrom (15a, b) zumindest teilweise aus der Anlage (2) herausgeführt wird.

3. Verfahren nach Anspruch 1 oder 2, **dadurch gekennzeichnet, dass** eine Mehrfach-Quench-Überhitzungsstufe (22) der mindestens einen Überhitzungsstufe (14a, b) eine Vielzahl von Quenchabschnitten (20) aufweist, wobei jeder der Quenchabschnitte (20) prozesstechnisch zwischen zwei jeweiligen Heizabschnitten (17) der Mehrfach-Quench-Überhitzungsstufe (22) angeordnet ist.

4. Verfahren nach einem der Ansprüche 1 bis 3, **dadurch gekennzeichnet, dass** der Dampferhitzer (13) eine Vielzahl von Überhitzungsstufen (14a, b) zum Gewinnen eines jeweiligen überhitzten Ausgangs-Dampfstroms (15a, b) aus einem jeweiligen Eingangs-Dampfstrom (16a, b) aufweist.

5. Verfahren nach Anspruch 4, **dadurch gekennzeichnet, dass** jeder der Vielzahl von Überhitzungsstufen (14a, b) einen jeweiligen Eingangs-Dampfstrom (16a, b) und einen jeweiligen Ausgangs-Dampfstrom (15a, b) mit einem unterschiedlichen Dampfdruck aufweist, vorzugsweise, dass der Dampfdruck des Eingangs-Dampfstroms (16a) und des Ausgangs-Dampfstroms (15b) einer ersten Überhitzungsstufe (14a) der Vielzahl von Überhitzungsstufen (14a, b) in einem Hochdruckbereich ist und dass der Dampfdruck des Eingangs-Dampfstroms (16b) und des Ausgangs-Dampfstroms (15b) einer zweiten Überhitzungsstufe (14b) der Vielzahl von Überhitzungsstufen (14a, b) in einem Mitteldruckbereich ist.

6. Verfahren nach einem der Ansprüche 1 bis 5, **dadurch gekennzeichnet, dass** der überhitzte Ausgangs-Dampfstrom (15a, b) einen Massenstrom an Dampf aufweist, welcher mindestens 120 % des Massenstroms an Dampf des Eingangs-Dampfstroms (16a, b) beträgt.

7. Verfahren nach einem der Ansprüche 1 bis 6, **dadurch gekennzeichnet, dass** der Energieträgerstrom (3) einer der ATR-Reaktoranordnung (6) prozesstechnisch vorgelagerten Vorerwärmungsstufe (25) der Anlage zur Vorerwärmung des Energieträgerstroms (3) zugeführt wird, welche Vorerwärmungsstufe (25) überwiegend, vorzugsweise ausschließlich, mit dem Purgestrom (9) gespeist wird.

8. Verfahren nach einem der Ansprüche 1 bis 7, **dadurch gekennzeichnet, dass** die Trennvorrichtung (8) eine Adsorptionsvorrichtung ist und dass die Trennvorrichtung (8) mit einem Wirkungsgrad betrieben wird, welcher etwa 90 % beträgt, sodass etwa 10 % des Wasserstoffs im der Adsorptionsvorrichtung zugeführten Synthesegasstrom (7) in den Purgestrom (9) gelangt.

9. Verfahren nach einem der Ansprüche 1 bis 8, **dadurch gekennzeichnet, dass** der Energieträgerstrom (3) einer der ATR-Reaktoranordnung (6) prozesstechnisch vorgelagerten Sättigungsstufe (26) der Anlage (2) zur Sättigung mit Dampf zugeführt wird und dass die Sättigungsstufe (26) mit Prozesskondensat gespeist wird.

10. Verfahren nach einem der Ansprüche 1 bis 9, **dadurch gekennzeichnet, dass** das in dem jeweiligen Quenchabschnitt (20) dem Eingangs-Dampfstrom (16a, b) zugeführte Kesselspeisewasser (21) vorzugsweise im Wesentlichen vollständig aus Prozesskondensat der Anlage (2) gewonnen wird.

11. Verfahren nach einem der Ansprüche 1 bis 9, **dadurch gekennzeichnet, dass** der Dampferhitzer (13) eine Dampferzeugungsstufe (27) zum Erzeugen eines auf mindestens 290°C erhitzten Zusatzdampfstroms (28) aufweist, vorzugsweise, dass der Zusatzdampfstrom (28) einem Eingangs-Dampfstrom (16a, b) vor Zuführung zur Überhitzungsstufe (14a, b) zugeführt wird.

12. Verfahren nach einem der Ansprüche 1 bis 11, **dadurch gekennzeichnet, dass** der Dampferhitzer (13) mit Wasserstoff, vorzugsweise aus dem Wasserstoffstrom (1), gespeist wird.

13. Verfahren nach einem der Ansprüche 1 bis 12, **dadurch gekennzeichnet, dass** die Anlage (2) eine Kompressoranordnung (10) mit mindestens einem Kompressor (11a-c) aufweist, vorzugsweise, dass die Kompressoranordnung (10) zumindest teilweise mit Dampf betrieben wird und mindestens ein überhitzter Ausgangs-Dampfstrom (15a, b) der Kompressoranordnung (10) zugeführt wird.

14. Verfahren nach Anspruch 13, **dadurch gekennzeichnet, dass** die Kompressoranordnung (10) zumindest teilweise durch Strom betrieben wird und der Strom zum Betrieb der Kompressoranordnung (10) zumindest teilweise, insbesondere im Wesentlichen vollständig, durch die Turbinenanordnung (12) erzeugt wird, vorzugsweise, dass ein im Wesentlichen vollständiger Strombedarf der Anlage (2) durch die Turbinenanordnung (12) erzeugt wird, weiter insbesondere dass eine durch die Turbinenanordnung (12) erzeugte Stromleistung den Strombedarf der Anlage (2) übersteigt.

15. Verfahren nach einem der Ansprüche 1 bis 14, **dadurch gekennzeichnet, dass** die Anlage (2) eine Ammoniak-Reaktoranordnung (31) aufweist und dass der Ammoniak-Reaktoranordnung (31) der Wasserstoffstrom (1) und ein Stickstoffstrom (32) zur Herstellung von Ammoniak (33) zugeführt wird.

16. Verfahren nach einem der Ansprüche 1 bis 15, **dadurch gekennzeichnet, dass** der Energieträgerstrom (3) Erdgas aufweist, vorzugsweise im Wesentlichen aus Erdgas besteht.

17. Verfahren nach einem der Ansprüche 1 bis 16, **dadurch gekennzeichnet, dass** der Dampferhitzer (13) einen Wärmetauscher (37) zur Erhitzung eines sauerstoffhaltigen Verbrennungsgases (38) durch ein Rauchgas (39) als Abgas des Brenners (19) aufweist.

18. Verfahren zur Herstellung von Wasserstoff, **dadurch gekennzeichnet, dass** der Wasserstoff aus einem Wasserstoffstrom (1) erhalten wird, welcher nach dem Verfahren nach einem der Ansprüche 1 bis 17 gewonnen wurde.

19. Anlage (2) zum Gewinnen eines Wasserstoffstroms (1), umfassend eine Sauerstoffgewinnungsanordnung (5) zum Bereitstellen eines Sauerstoffstroms (4), umfassend eine ATR-Reaktoranordnung (6) zum Gewinnen eines Synthesegasstroms (7) mit Wasserstoff und Kohlenstoffoxiden, wobei der ATR-Reaktoranordnung (6) ein kohlenstoffhaltiger Energieträgerstrom (3) und der Sauerstoffstrom (4) zugeführt wird, wobei die ATR-Reaktoranordnung (6) dazu eingerichtet ist, aus dem Energieträgerstrom (3) den Synthesegasstrom (7) durch eine autotherme Reformierung mit dem Sauerstoffstrom (4) zu gewinnen, sodass eine insbesondere katalytische partielle Oxidation die für die endothermen Reformierungsreaktionen erforderliche Wärme bereitstellt und die Anlage (2) umfassend eine Trennvorrichtung (8) zum Trennen des Synthesegasstroms (7) in den Wasserstoff aufweisenden Wasserstoffstrom (1) und in einen Kohlenstoffoxide aufweisenden Purgestrom (10), welcher Trennvorrichtung (8) der Synthesegasstrom (3) zumindest teilweise zugeführt wird, wobei die Anlage (2) einen Dampferhitzer (13) aufweist, wobei der Dampferhitzer (13) mindestens eine Überhitzungsstufe (14a, b) zum Gewinnen eines jeweiligen überhitzten Ausgangs-Dampfstroms (15a, b) aus einem jeweiligen Eingangs-Dampfstrom (16a, b) aufweist, welcher Eingangs-Dampfstrom (16a, b) bis zum Erhalten des überhitzten Ausgangs-Dampfstroms (15a, b) durch den Dampferhitzer (13) geführt wird und wobei die Anlage (2) eine Turbinenanordnung (12) zum Erzeugen von elektrischem Strom aufweist, welche Turbinenanordnung (12) durch mindestens einen überhitzten Ausgangs-Dampfstrom (15a, b) angetrieben wird, **dadurch gekennzeichnet, dass** die mindestens eine Überhitzungsstufe (14a, b) jeweils mindestens zwei Heizabschnitte (17) aufweist, welche Heizabschnitte (17) durch einen Innenbereich (18) des Dampferhitzers (13) geführt sind, in welchem Innenbereich (18) die Heizabschnitte (17) durch einen Brenner (19) des Dampferhitzers (13) erhitzt werden, wobei die mindestens eine Überhitzungsstufe (14a, b) einen prozesstechnisch zwischen den mindestens zwei Heizabschnitten (17) angeordneten Quenchabschnitt (20) aufweist, in welchem Quenchabschnitt (20) dem Eingangs-Dampfstrom (16a, b) in der Anlage (2) angefallenes Kesselspeisewasser (21) zum Quenchen zugeführt wird.
